**Europäisches Patentamt**

**European Patent Office**

**Office européen des brevets**

(19)

(11) Veröffentlichungsnummer: **0 186 830**

**B1**

(12)

# EUROPÄISCHE PATENTSCHRIFT

(45) Veröffentlichungstag der Patentschrift: **19.09.90**

(51) Int. Cl.⁵: **B 60 R 22/20**

(21) Anmeldenummer: **85115880.8**

(22) Anmeldetag: **12.12.85**

(54) **Höhenverstelleinrichtung für den Umlenkbeschlag eines Sicherheitsgurtes.**

(30) Priorität: **29.12.84 DE 3447817**

(43) Veröffentlichungstag der Anmeldung:
**09.07.86 Patentblatt 86/28**

(45) Bekanntmachung des Hinweises auf die
Patenterteilung:
**19.09.90 Patentblatt 90/38**

(84) Benannte Vertragsstaaten:
**DE FR GB IT SE**

(56) Entgegenhaltungen:
**DE-U-8 401 390**
**DE-U-8 412 788**
**FR-A-2 479 694**

(73) Patentinhaber: **Adomeit, Heinz-Dieter, Dr.-Ing**
**Grolmanstrasse 16**
**D-1000 Berlin 12 (DE)**

(72) Erfinder: **Adomeit, Heinz-Dieter, Dr.-Ing**
**Grolmanstrasse 16**
**D-1000 Berlin 12 (DE)**

(74) Vertreter: **Weber, Dieter, Dr. et al**
**Dr. Dieter Weber und Dipl.-Phys. Klaus Seiffert**
**Patentanwälte Gustav-Freytag-Strasse 25**
**Postfach 6145**
**D-6200 Wiesbaden 1 (DE)**

**Beschreibung**

Die Erfindung betrifft eine Höhenverstelleinrichtung für einen Umlenkbeschlag, der vorzugsweise am Türpfosten eines Kraftfahrzeuges für Sicherheitsgurte vorgesehen ist, mit einer stationären Führungsschiene mit Doppel-C-Profil, einem längs der Führungsschiene verschiebbaren Schlitten, an welchem der Umlenkbeschlag anbringbar ist, und mit einem den Schlitten an der Führungsschiene verklinkenden und sich durch eine Öffnung im Schlitten erstreckenden Blockierelement, welches allgemein eine größere Längserstreckung als Quererstreckung hat, wobei an dem die C-Profile der Führungsschiene verbindenden Steg in Längsrichtung eine Reihe von Raststellen vorgesehen ist, an welchen das eine Ende des sich im wesentlichen innerhalb der Führungsschiene befindlichen Blockierelementes einrastbar ist.

Eine derartige Höhenverstelleinrichtung ist aus dem deutschen Gebrauchsmuster Nr. 84 01 390 bekannt. Die bekannte Höhenverstelleinrichtung weist Eingreifdurchbrechungen auf, deren vordere, untere Kanten in einer Ebene mit der Grundplatte des C-Profils liegen. Dies kann bei sehr schnellen Bewegungen des Schlittens oder bei einer leichten seitlichen Verschiebung des Blokkierelementes unter Umständen dazu führen, daß das Blockierelement über mehrere Eingreifdurchbrechungen hinweggleitet ohne einzurasten.

Das bekannte Blockierelement ist im Längsschnitt L-förmig, wobei das freie Ende des einen Schenkels in die betreffende Durchbrechung eingeführt wird.

Im Unfallmoment kann das Blockierelement durch die auftretenden Kräfte abgeknickt werden, wenn es nicht sehr stabil ausgeführt ist. Außerdem ist eine Vielzahl von Einzelteilen für das Verschieben des Schlittens, Betätigen des Blokkierelementes und Andrücken der Teile in der Arretierstellung erforderlich, so daß die ganze Verstelleinrichtung kompliziert aufgebaut, teuer, störanfällig und schwer ist, obgleich selbst beim Einrasten des Blockierelementes in eine Durchbrechung die sichere Halterung des Umlenkbeschlages nicht garantiert ist. Dies gilt auch für das Blockierelement der Höhenverstelleinrichtung nach dem deutschen Gebrauchsmuster Nr. 84 12 788.

Der Erfindung liegt daher die Aufgabe zug-runde, die Höhenverstelleinrichtung der bekann-ten Art so zu verbessern, daß die Gesamteinrichtung relativ leicht gebaut werden kann und dennoch bei einwandfreier Funktionsfähigkeit eine hohe Belastbarkeit aufweist.

Diese Aufgabe wird erfindungsgemäß dadurch gelöst, daß als die Reihe von Raststellen eine Reihe von Arretierzähnen vorgesehen ist, daß das Blockierelement so gestaltet und gelagert ist, daß die Blockierkräfte in etwa in seiner Längsrichtung geführt werden, daß das Blockierelement am anderen Ende mit der Schloßtaste in Eingriff bringbar ist und daß der Schlitten im Querschnitt U-förmig ist, wobei die freien Schenkel des U im jeweiligen C-Profil der Führungsschiene geführt sind.

Es versteht sich, daß die im Querschnitt doppel-C-förmige Führungsschiene eine hohe Festigkeit hat, die erfindungsgemäß insofern besonders vorteilhaft ausgenutzt wird, als das Blockierelement sich in der Sperrposition gegen einen Arretierzahn anlegt und dabei doch im wesentlichen innerhalb der Führungsschiene verbleibt. Damit werden die Zug-bzw. Druckkräfte im Unfallmoment etwa in die Längsrichtung des Blockiere-mentes gelenkt. Dabei ist es vorteilhaft, daß das Blockierelement allgemein eine größere Längserstreckung als Quererstreckung hat und die Kräfte in dieser Längsrichtung geführt werden, weil dann weniger die Gefahr besteht, daß ein um 90° abgewinkelter Schenkel wie bei der bekannten L-Form abgewinkelt oder abgeknickt wird. Erfindungsgemäß rastet das Blockierelement also nicht in eine Durchbrechung ein sondern stützt sich im Unfallmoment an dem betreffenden Arretierzahn ab.

Das Verbleiben des Blockierelementes im wesentlichen innerhalb des Raumes der Führungsschiene, und zwar sowohl in der blockierten wie auch in der geöffneten Stellung, ist besonders dann von Interesse, wenn bewegliche Bedienteile praktisch innerhalb der vorhandenen Verstellschiene liegen müssen, z.B. innerhalb des Bauraumes in dem B-Pfosten eines Fahrzeuges.

Der U-förmige Querschnitt des Schlittens hat beim Eingriff mit der Führungsschiene den Vorteil, daß sich unter Last Schlitten und Führungsschiene ineinander verkrallen, wobei in vorteilhafter Weise der Schlitten die beiden Schenkel der Doppel-C-Führungsschiene zusammenhält. Auf diese Weise kann man die Wandstärke der Führungsschiene dünner und somit leichter auslegen, weil Teile der Last auch vom Schlitten aufgenommen werden.

Der Schlitten ist ein einfaches Teil, welches im Prinzip aus einem Schraubbolzen mit einer großen dünnen Kopfplatte bestehen kann. Damit ist die Verstelleinrichtung gemäß der Erfindung aus wenigen einfachen Teilen zusammensetzbar und gewährt hohe Sicherheit.

Bei vorteilhafter weiterer Ausgestaltung der Erfindung weist das Blockierelement zwei im wesentlichen gerade Endschenkel auf, ist im Querschnitt flach und Z-förmig und im Durchstoßbereich durch den Schlitten gelenkig gelagert. Diese Form des Blockierelementes unterstützt die Ableitung der Kräfte im Unfallmoment in Längsrichtung des Elementes zur Abstützung auf dem gerade in Eingriff befindlichen Arretierzahn bei Vermeidung der Gefahr des Abknickens. Das Z-förmige Biegen des Blockierelementes kann so ausgeführt werden, daß eine Abknickgefahr praktisch ausgeschlossen ist.

Die gelenkige Lagerung im Durchstoßbereich durch den Schlitten kann auf verschiedene Weise ausgeführt sein. Beispielsweise kann im Lagerbereich in der Schlittenöffnung eine Lagerschale angeordnet sein, welche das Blockierelement in der gewünschten Weise gelenkig lagert.

Eine bevorzugte andere Alternative ist erfindungsgemäß dadurch ausgestaltet, daß das Blockierelement ein Lagergegenteil aufweist, durch das eine Drehachse gesteckt ist, die sich in einem weiteren Lagergegenteil des Führungsgehäuses am Schlitten abstützt. Anstelle der vorstehend erwähnten Lagerschale bei der ersten Ausführungsform kann bei dieser zweiten bevorzugten Alternative die Drehachse in einem Lagergegenteil gelenkig angeordnet werden mit dem Vorteil, daß das Blockierelement auch bei der Herstellung als Massenteil mit nicht unerheblicher Toleranz exakt und geometrisch definiert gehalten wird. Die erwähnten Toleranzen des Blockierelementes spielen beispielsweise bei der entsprechenden Blechdicke eine Rolle, wobei in Längserstrekkung des Blockierelementes dessen Dicke gewissen Schwankungen im Rahmen der zulässigen Toleranzen unterworfen sein kann, ohne daß die leichtgängige Lagerung eines solchen Blockierelementes beeinträchtigt würde. Auch der Biegeradius beim Z-förmigen Verformen des Blockierelementes spielt bei dieser Ausführungsform nur eine untergeordnete Bedeutung; d.h. man ist in gewissen Bereichen vom Biegeradius unabhängig.

Verwendet man die oben stehend erwähnte erste Alternative mit der Lagerschale, dann ist es erfindungsgemäß besonders vorteilhaft, wenn der der Führungsschiene zugewandte erste Radius des Blockierelementes an seiner Unterseite eine Halbschale für eine in einen Schlitz des Schlittens eingelegte Lagerschale ist und wenn der der Führungsschiene abgewandte Endschenkel des Blockierelementes ein Gegenlager aus Kunststoff trägt. Dieses Gegenlager ist zweckmäßigerweise am Blockierelement befestigt und stützt sich im Durchsteckbereich des Schlittens an der erwähnten Lagerschale ab, die sich ebenfalls in der schlitzförmigen Durchstecköffnung befindet.

Eine bevorzugte Ausführungsform der Erfindung ist weiterhin dadurch gekennzeichnet, daß an dem dem Schlitz gegenüberliegenden Ende des Schlittens ein zur Führungsschiene hin herausstehender Hilfszahn angebracht ist, der zwischen zwei Arretierzähne zu liegen kommt. Dieser Hilfszahn ist in Gestalt eines Vorsprunges ausgebildet und beispielsweise am Schlitten angeprägt. Wenn im Unfallmoment die Zug-bzw. Druckkraft große Beträge annimmt, nimmt dieser hilfszahnförmige Vorsprung einen Teil der Kräfte auf, die anderenfalls die im allgemeinen aus Kunststoff bestehende Führung des Schlittens verformt, und leitet diese Kräfte auf einen anderen Arretierzahn ab als den, gegen welche das Blockierelement anliegt.

Vorteilhaft ist erfindungsgemäß eine zwischen dem Schlitten und Blockierelement angeordnete Feder zum Vorspannen des Blockierelementes in die eingerastete Stellung. Hier kann es sich um eine Formfeder, eine Druckfeder oder dergleichen handeln, je nach Anordnung und Platzmöglichkeiten für die Unterbringung dieser Feder. Sie gewährleistet, daß das Blockierelement stets versucht, gegen einen Arretierzahnrad in Anlage zu kommen.

Den Schlitten kann man längs der Führungsschiene nur verschieben, wenn das Blockierelement vom Arretierzahnrad ausser Eingriff gebracht ist, und hierzu dient eine der Vorspannfeder entgegenwirkende Betätigungseinrichtung. Dabei ist es erfindungsgemäß zweckmäßig, wenn ein Führungsgehäuse aus Kunststoff um den Schlitten herum angeordnet ist und eine Halterung zur Aufnahme der beweglichen Schloßtaste mit Betätigungsvorsprüngen aufweist, die mit dem Blockierelement in Eingriff bringbar sind. Die Schloßtaste bewegt beim Niederdrücken das Blockierelement außer Eingriff mit dem Arretierzahnrad, so daß dann der Schlitten bewegbar ist. Beim Loslassen der Schloßtaste rastet das Blockierelement dann unter der Kraft der Vorspannfeder sogleich gegen den nächstliegenden Arretierzahn. Die Betätigungsvorsprünge können in Gestalt von Fingern ausgebildet sein, die dünn und weichelastisch sind. Hierdurch wird das Blockierelement aus der eingerasteten Stellung in die geöffnete Position gedreht und z.B. durch einen Vorfinger während der Fahrt durch Erschütterungen am Klappern gehindert.

Eine volle Kompensation der vor und hinter dem Lager des Blockierelementes wirkenden Massenkräfte wird in vorteilhafter Weise dann möglich, wenn erfindungsgemäß die gelenkige Lagerung des Blockierelementes im Schwerpunktsbereich des Blockierelementes angeordnet ist. Beispielsweise ist die Z-förmige Biegung des Blockierelementes mit Vorteil dann in seinem Schwerpunktsbereich vorgesehen; oder mit anderen Worten befindet sich die Lagerung im Schwerpunkt des Blockierelementes. Treten irgendwelche Querkräfte auf, dann gibt es bei dieser Ausführungsform praktisch keine Massenkräfte des Blockierelementes selbst, welche sein Herausschleudern aus der Einraststellung veranlassen würden.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen:

Figur 1 eine doppelte Ansicht einer ersten Höhenverstelleinrichtung, teilweise im Querschnitt, wobei die linke Hälfte die Ansicht auf Figur 2 von rechts und die rechte Hälfte eine Schnittansicht entlang der Linie I—I in Figur 2 ist,

Figur 2 einen Längsschnitt durch die Höhenverstelleinrichtung mit Blockierelement, Schlitten und Schloßtaste,

Figur 3 eine abgebrochene und teilweise im Schnitt dargestellte Ansicht auf Figur 2 von unten,

Figur 4 eine perspektivische Ansicht der Höhenverstelleinrichtung mit Führungsschiene,

Figur 5 drei Schnittansichten des Schlittens, wobei Figur 5a die Seitenansicht, Figur 5b die Draufsicht von rechts auf das Teil der Figur 5a und Figur 5c eine Einzelansicht mit dem Hilfszahn ist,

Figur 6 eine Querschnittsansicht durch eine Höhenverstelleinrichtung nach einer zweiten bevorzugten Ausführungsform ähnlich wie Figur 1 bei der ersten Ausführungsform,

Figur 7 eine mit Figur 2 vergleichbare Darstellung, und zwar nach der zweiten Ausführungsform, und

Figur 8 eine mit Figur 3 vergleichbare Darstellung, hier aber wieder bei der zweiten Ausführungsform.

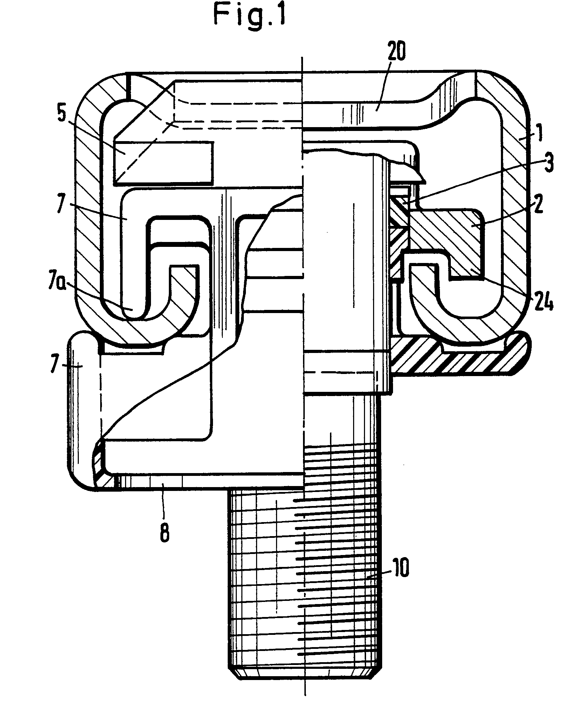

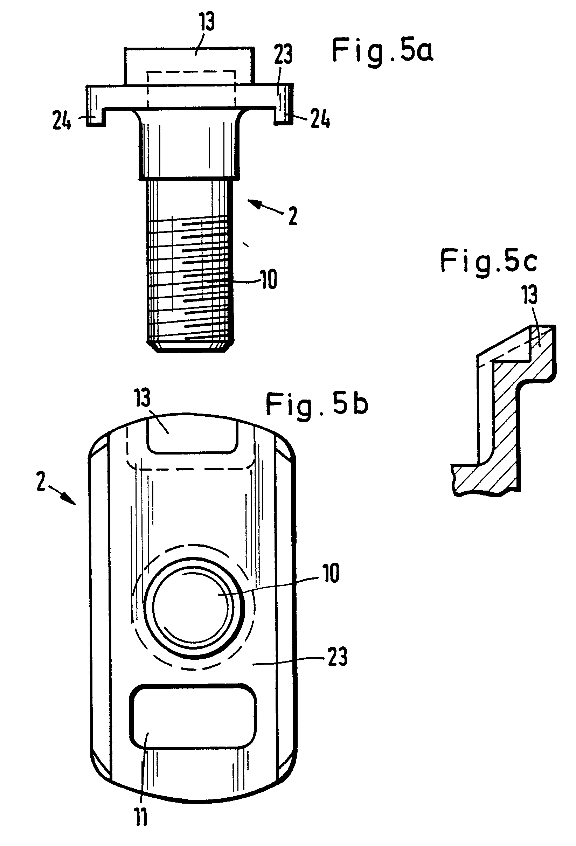

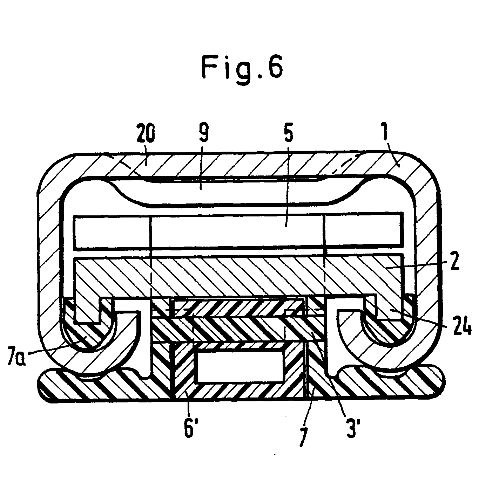

Als krafttragende Teile erkennt man in nahezu allen Figuren die stationäre Führungsschiene 1 mit dem Doppel-C-Profil, in der ein im Querschnitt U-förmiger Schlitten 2 geführt ist, dessen Querschnitt man gut in den Figuren 1 und 6 erkennt. Der Schlitten 2 trägt mittig einen Haltebolzen 10, wie auch aus den Figuren 5a und 5b hervorgeht. Weiterhin ist durch einen Querschlitz 11 im Schlitten 2 ein im Querschnitt flaches und Z-förmiges Blockierelement 5 gesteckt. Die übrigen Teile sind im wesentlichen nicht krafttragend.

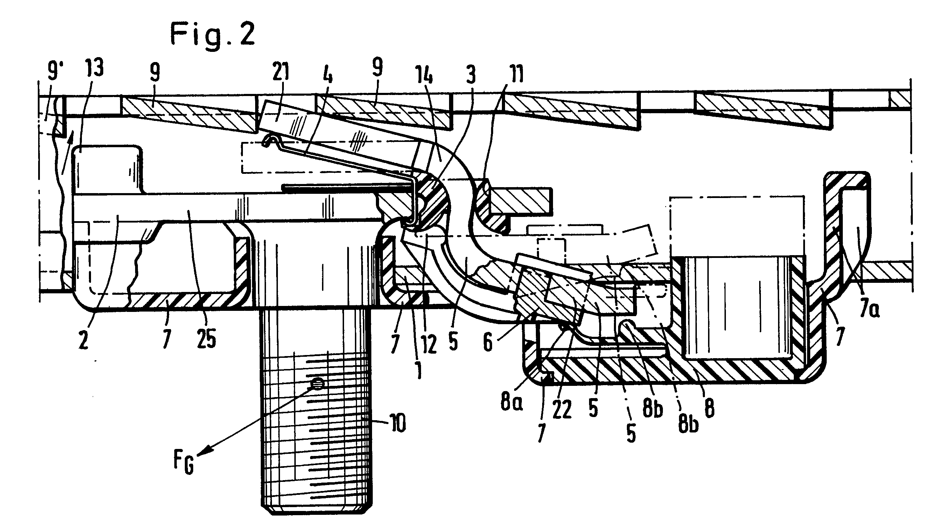

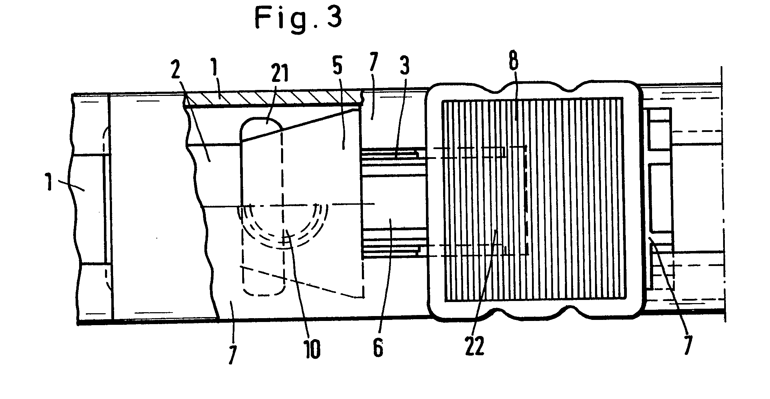

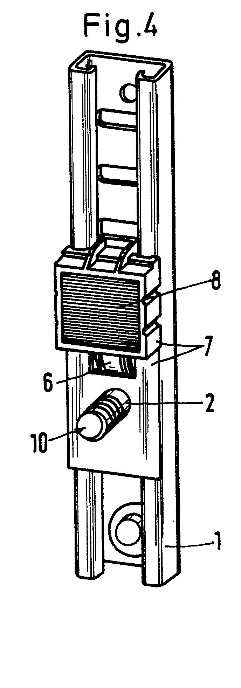

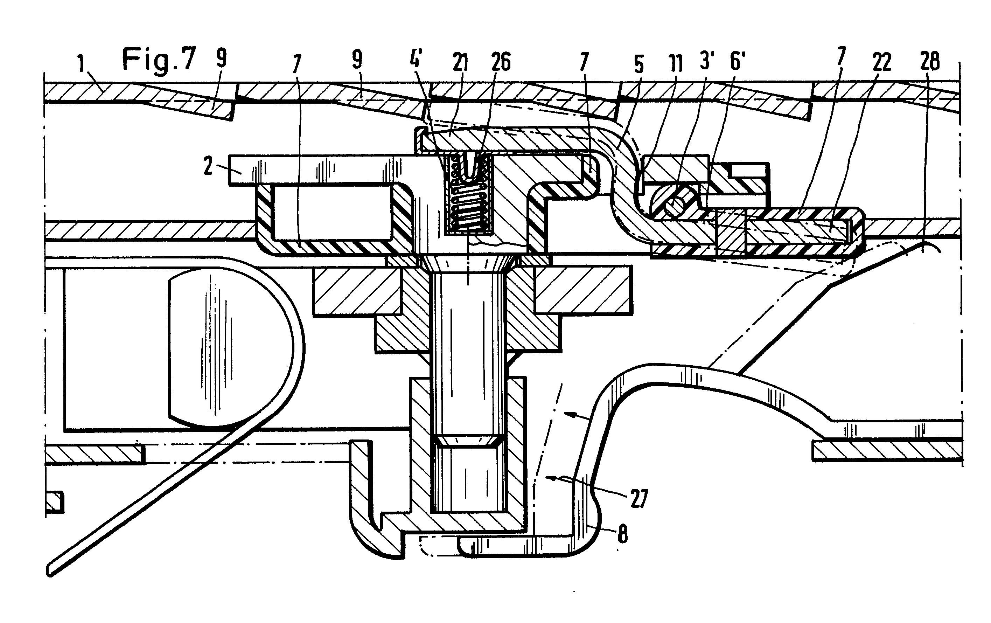

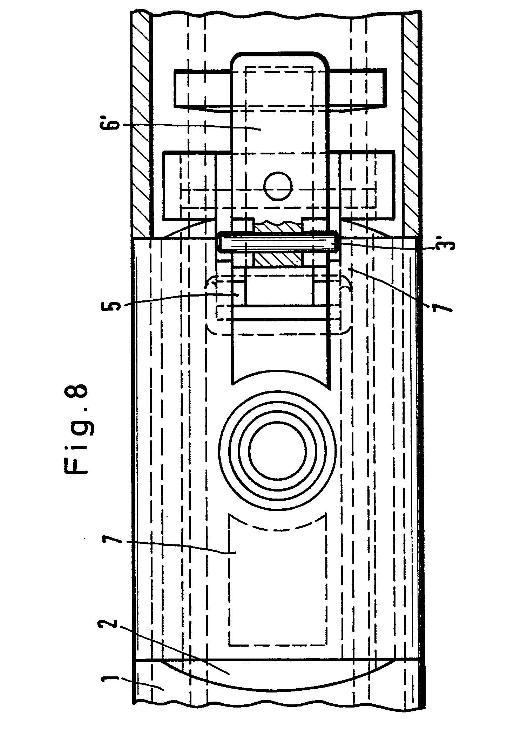

Bei der ersten Ausführungsform nach den Figuren 1 bis 4 ist in dem die C-Profile der Führungsschiene 1 verbindenden Steg 20 in Längsrichtung eine Reihe von Arretierzähnen 9, 9' vorgesehen. Aus den Figuren 2 und 4 erkennt man, daß sich zwischen den Arretierzähnen 9 Öffnungen befinden, die aber nicht notwendig sind, wie die zweite Ausführungsform nach den Figuren 6 bis 8 zeigt, insbesondere Figur 7.

Das Blockierelement 5 ist in Seitenansicht in Figur 2 erkennbar. Es weist zwei im wesentlichen gerade Endschenkel 21, 22 auf, zwischen denen im Schwerpunktsbereich des Blockierelementes 5 die Z-Form angeordnet ist. Mit diesem Mittelbereich ist das Blockierelement 5 durch die Öffnung 11 im Schlitten 2 hindurchgesteckt. Durch die Formfeder 4 wird es in Raststellung vorgespannt. Man erkennt, wie in der in Figur 2 mit ausgezogenen Linien gezeigten Raststellung die im Unfallmoment auftretenden Kräfte in Längsrichtung des Blockierelementes 5 auf den Arretierzahn 9 geleitet werden. Hierdurch können hohe Kräfte quer (in Figur 2 nach links) in Längsrichtung der Führungsschiene 1 aufgenommen werden, Kräfte, die am Haltebolzen 10 des Schlittens 2 durch die durch den Pfeil $F_G$ entstehenden Gurtkräfte bedingt sind.

Der Durchstoßbereich im Schlitten 2 wird durch die Öffnung 11 gebildet, die bei beiden Ausführungsformen die Gestalt eines Schlitzes hat. Bei der ersten Ausführungsform nach den Figuren 1 bis 4 liegt eine Lagerschale 3 im Schlitz 11 des Schlittens 2 und sorgt für die gelenkige Halterung des Blockierelementes 5 über dessen der Führungsschiene 1 zugewandten ersten Radius 14, der an der Unterseite des Elementes 5 wie eine Halbschale wirkt und sich auf der Lagerschale 3 abstützt. Ein Gegenlager 6 aus Kunststoff ist am Blockierelement 5 befestigt und stützt sich mit seiner vorderen Führungsnase 12 an der Lagerschale 3 ab.

In den Figuren 5a bis 5c ist der U-förmige Schlitten 2 in zwei verschiedenen Ansichten und mit einer Einzelheit gezeigt. Wie das Blockierelement 5 hat auch der Schlitten 2 eine ausgesprochen einfache Gestalt. Beide Teile benötigen keine besonderen Werkstoffanforderungen. Der Schlitten wurde aus einem Schraubbolzen mit einer dünnen Kopfplatte entwickelt. Man erkennt diese Gestalt in etwa noch aus Figur 5a in der Seitenansicht. Die Kopfplatte 23 wird auf die rechteckige Form gemäß Darstellung der Figur 5b abgestanzt, und dabei werden die Kanten 24, welche in das benachbarte C-Profil der Führungsschiene 1 ragen, angeprägt. Im gleichen Arbeitsgang wird auch der in Figur 5c als Einzelheit dargestellte Hilfszahn 13 und die Durchstecköffnung 11 für das Blockierelement 5 eingelocht. (Bei der Ausführungsform nach den Figuren 6 bis 8 ist dieser Hilfszahn 13 nicht vorgesehen und nicht erforderlich.)

Um diesen U-förmigen Schlitten 2 ist ein Führungsgehäuse 7 aus Kunststoff angeordnet, in welchem auch auf der in Figur 2 gezeigten Rahmenseite die Schloßtaste 8 untergebracht ist. An den Enden des Gehäuses 7 sind in Figur 1 links gezeigte Führungsnasen 7a zur Führung des Schlittens 2 angespritzt.

Bei der ersten Ausführungsform nach den Figuren 1 bis 4 ist die Schloßtaste 8 mit einem dünnen, weich-elastischen Vorfinger 8a auf das Gegenlager 6 des Blockierelementes 5 und nach dessen Verformung mit dem Hauptfinger 8b auf das Blockierelement 5 selbst abgestützt. Drückt man die Schloßtaste 8 nieder, wenn man den Schlitten 2 längs der Führungsschiene 1 verschieben will, dann drückt zunächst der Vorfinger 8a auf das Gegenlager 6 und nach dessen Verformung der Hauptfinger 8b auf das Blockierelement 5, so daß dieses aus der eingerasteten Stellung in die in Figur 2 mit gestrichelten Linien gezeigte gestrichelte Position (geöffnete Stellung) gedreht wird. Der Vorfinger 8a hat den Zweck, die Schloßtaste 8 zu "entklappern".

Wirkt im Unfallmoment in der arretierten Stellung gemäß Figur 2 eine Kraft $F_G$ am Befestigungsbolzen 10 in der eingezeichneten Richtung, so kann -wenn diese Kraft $F_G$ sehr große Beträge annimmt — diese das Kunststoff-Führungsgehäuse 7 des Schlittens 2 so verformen, daß um die Lagerschale 3 des Blockierelementes 5 herum der gesamte Schlitten 2 so ankickt, daß der Hilfszahn 13 von einem zweiten ausgeprägten Steg 9' (Figur 2) im Steg 20 der Führungsschiene 1 zu liegen kommt. Auf diese Weise wird die Sicherheit der Verriegelung deutlich erhöht.

Von der Lagerschale 3 für die gelenkige Lagerung des Blockierelementes 5 ist oben bereits besprochen worden. Das am Blockierelement 5 befestigte Kunststoff-Gegenlager 6 vervollständigt von der Gegenseite, gemäß Figur 2 also von rechts am rechten Ende 22 des Blockierelementes 5, die definierte Lagerung des Blockierelementes 5.

Sowohl die erste als auch die zweite Ausführungsform der Höhenverstelleinrichtung kommt mit sehr wenigen Teilen aus, nämlich den eingangs beschriebenen krafttragenden Teilen aus Metall und vier Kunststoffteilen (Lager 3, 3' Gegenlager 6, 6' Führungsgehäuse 7 und Schloßtaste 8).

Die zweite Ausführungsform ist in den Figuren 6 bis 8 gezeigt und weist zahlreiche Teile auf, die mit der ersten Ausführungsform nach den Figuren 1 bis 4 identisch sind, so daß hier gleiche Bezugszahlen verwendet werden und eine nochmalige Beschreibung nicht erforderlich ist.

Der Unterschied der zweiten Ausführungsform besteht gegenüber der ersten Alternative darin, daß hier die gelenkige Lagerung des länglichen, flachen und Z-förmig gebogenen Blockierelementes 5 nicht über eine Lagerschale mit Gegenlager sondern einer angeformten Drehachse 3' besteht, die in einem am Schlitten 2 angebrachten Lagergegenteil 6' gehalten ist. Die Führungsschiene 1 hat lediglich die Arretierzähne 9 ausgeprägt, Schlitze oder Durchsteckräume zwischen den einzelnen Arretierzähnen der Führungsschiene 1 bestehen nicht.

Das Blockierelement 5 kann an dem vorausliegenden Zahn (in Figur 7 der Zahn über dem geraden Ende 21) eine vorteilhafte Rückenabstützung erhalten. Dadurch wird eine etwaige Ausknickgefahr des Blockierelementes noch weiter verringert. Durch den Lagerring zur Führung der Drehachse 3' kann das Blockierelement 5 bezüglich des Schlittens 2 auch so genau geführt sein, daß der Biegerücken des Blockierelementes an der Schlitzstützseite im Schlitten 2 praktisch spielfrei und exakt vorausgeführt werden kann. Dadurch hat man bei Last eine geringe Deformation und schnelles Arretieren.

Beim Vergleich der ersten mit der zweiten Alternative erkennt man, daß die Blechdicke des Blockierelementes 5 und sein Biegeradius in dem Z-förmig gebogenen Mittelteil bei der ersten Alternative eine größere Rolle spielen und bei schlechter Verarbeitung Bewegungsprobleme im Lager 3 erbringen können, während bei der zweiten Ausführungsform nach den Figuren 6 bis 8 ein exakter und geometrisch definierter Drehpunkt für das Blockierelement 5 gewährleistet ist, ohne daß man Toleranzprobleme bei den betreffenden Lagerteilen antreffen würde. Vom Biegeradius und der Blechdicke des Blockierelementes (Toleranzbereich) ist man bei dieser Ausführungsform unabhängig.

Anstelle der Formfeder 4 wird eine Druckfeder 4' verwendet, die im Schlitten 2 untergebracht sein kann und über einen Zapfen 26, der am linken geraden Ende 21 des Blockierelementes 5 angebracht ist, geführt und gehaltert sein kann.

Die Schloßtaste 8 wird beim Betätigen in Richtung der Pfeile 27 gedrückt, wodurch der Finger 28 aus der in durchgezogenen Linien gezeigten in die mit gestrichelten Linien gezeigte Position so verschoben wird, daß er mit dem tastenseitigen geraden Ende 22 des Blockierelementes 5 in Eingriff kommt und dieses in die entriegelte Stellung drücken kann.

**Patentansprüche**

1. Höhenverstelleinrichtung für einen Umlenkbeschlag, der vorzugsweise am Türpfosten eines Kraftfahrzeuges für Sicherheitsgurte vorgesehen ist, mit einer statinären Führungsschiene (1) mit Doppel-C-Profil, einem längs der Führungsschiene verschiebbaren Schlitten (2), an welchem der Umlenkbeschlag anbringbar ist, und mit einem den Schlitten (2) an der Führungsschiene (1) verklinkenden und sich durch eine Öffnung (11) im Schlitten (2) erstreckenden Blockierelement (55), welches allgemein eine größere Längserstreckung als Quererstreckung hat, wobei an dem die C-Profile der Führungsschiene (1) verbindenden Steg (20) in Längsrichtung eine Reihe von Raststellen vorgesehen ist, an welchen das eine Ende (21) des sich im wesentlichen innerhalb der Führungsschiene (1) befindlichen Blockierelementes (5) einrastbar ist, dadurch gekennzeichnet, daß als die Reihe von Raststellen einer Reihe von Arretierzähnen (9, 9') vorgesehen ist, daß das Blockierelement (5) so gestaltet und gelagert ist, daß die Blockierkräfte in etwa in seiner Längsrichtung geführt werden, daß das Blockierelement (5) am anderen Ende (22) mit einer Schloßtaste (8) in Eingriff bringbar ist und daß der Schlitten (2) im Querschnitt U-förmig ist, wobei die freien Schenkel des U im jeweiligen C-Profil der Führungsschiene (1) geführt sind.

2. Einrichtung nach Anspruch 1, dadurch gekennzeichnet, daß das Blockierelement (5) zwei im wesentlichen gerade Endschenkel (21, 22) aufweist, im Querschnitt flach und Z-förmig ist und im Durchstoßbereich (11) durch den Schlitten (2) gelenkig gelagert ist.

3. Einrichtung nach Anspruch 1 oder 2, dadurch gekennzeichnet, daß das Blockierelement (5) ein Lagergegenteil (6') aufweist, durch das eine Drehachse (3') gesteckt ist, die sich in einem weiteren Lagergegenteil des Führungsgehäuses (7) am Schlitten (2) abstützt.

4. Einrichtung nach Anspruch 1 oder 2, dadurch gekennzeichnet, daß der der Führungsschiene (1) zugewandte erste Radius (14) des Blockierelementes (5) an seiner Unterseite eine Halbschale für eine in einen Schlitz (11) des Schlittens (2) eingelegte Lagerschale (3) ist und daß der der Führungsschiene (1) abgewandte Endschenkel (22) des Blockierelementes (5) ein Gegenlager (6) aus Kunststoff trägt.

5. Einrichtung nach einem der Ansprüche 1 bis 4, dadurch gekennzeichnet, daß an dem dem Schlitz (11) gegenüberliegenden Ende (25) des Schlittens (2) ein zur Führungsschiene (1) hin herausstehender Hilfszahn (13) angebracht ist, der zwischen zwei Arretierzähne (9) zu liegen kommt.

6. Einrichtung nach einem der Ansprüche 1 bis 5, gekennzeichnet durch eine zwischen dem Schlitten (2) und Blockierelement (5) angeordnete Feder (4) zum Vorspannen des Blockierelementes (5) in die eingerastete Stellung.

7. Einrichtung nach einem der Ansprüche 1 bis 6, dadurch gekennzeichnet, daß ein Führungsgehäuse (7) aus Kunststoff um den Schlitten (2) herum angeordnet ist und eine Halterung zur Aufnahme der beweglichen Schloßtaste (8) mit Betätigungsvorsprüngen (8a, 8b) aufweist, die mit dem Blockierelement (5) in Eingriff bringbar sind.

8. Einrichtung nach einem der Ansprüche 1 bis 7, dadurch gekennzeichnet, daß die gelenkige Lagerung (3; 3') des Blockierelementes (5) in seinem Schwerpunktsbereich angeordnet ist.

**Revendications**

1. Dispositif de réglage en hauteur d'une ferrure de renvoi, prévue de préférence pour les ceintures de sécurité sur le montant de la porte d'un véhicule à moteur, avec un rail de guidage fixe (1) comportant un profil en double C, un coulisseau (2), pouvant se déplacer le long du rail de guidage, et sur lequel peut être apposée la ferrure de renvoi, et avec un élément de blocage (55), qui s'encliquette dans le coulisseau (2) sur le rail de guidage (1), et qui s'étend dans le coulisseau (2) en passant par une ouverture (11), élément de blocage ayant une étendue longitudinale supérieure à son étendue transversale, une rangée de crantages, dans laquelle peut s'encliqueter l'une des extrémités (21) de l'élément de blocage (5) se trouvant essentiellement à l'intérieur du rail de guidage (1), étant prévue dans le sens longitudinal, contre la traverse (20) reliant les profils en C du rail de guidage (1), caractérisé en ce qu'il est prévu en tant que rangée de crantages une rangée de dents de blocage (9, 9'), que l'élément de blocage est constitué et logé de façon que les forces de blocage puissent être guidées approximativement le long de sa direction longitudinale, que l'élément de blocage (5) peut, en son autre extrémité (22), être mis en prise avec une touche de serrure (8), et que le coulisseau (2) a en coupe la forme d'un U, les branches libres du U étant guidées dans le profil en C correspondant du rail de guidage (1).

2. Dispositif selon la revendication 1, caractérisé en ce que l'élément de blocage (5) comporte deux branches terminales essentiellement rectilignes (21, 22), est plat et a la forme d'un Z en section transversale, et est logé d'une manière articulée dans la zone (11) de traversée des coulisseaux (2).

3. Dispositif selon la revendication 1 ou 2, caractérisé en ce que l'élément de blocage (5) comporte un contre-palier (6'), à travers lequel est enfilé un axe de rotation (3'), lequel s'appuie contre le coulisseau (2), dans un autre contre-palier de l'enveloppe de guidage (7).

4. Dispositif selon la revendication 1 ou 2, caractérisé en ce que la première incurvation (14), dirigée vers le rail de guidage (1), de l'élément de blocage (5) est, sur sa face inférieure, constitué d'une demi-coque pour la coquille de coussinet (3) insérée dans une fente (11) du coulisseau (2), et que la branche terminale (22) opposée au rail de guidage (1), de l'élément de blocage (5) porte une butée (6) en matière plastique.

5. Dispositif selon l'une des revendications 1 à 4, caractérisé en ce que, en l'extrémité (25) du coulisseau (2) opposée à la fente (11) est disposée une dent auxiliaire (13), qui dépasse vers le rail de guidage (1), et qui vient s'appuyer entre deux dents de blocage (9).

6. Dispositif selon l'une des revendications 1 à 5, caractérisé par un ressort (4), disposé entre le coulisseau (2) et l'élément de blocage (5), destiné à assurer la pré-tension de l'élément de blocage (5) dans la position encliquetée.

7. Dispositif selon l'une des revendications 1 à 6, caractérisé en ce qu'une enveloppe de guidage (7) en matière plastique est disposée autour du coulisseau (2), et comporte un support pour recevoir une touche de serrure (8) mobile, présentant des saillies de manoeuvre (8a, 8b), qui peuvent être mises en prise avec l'élément de blocage (5).

8. Dispositif selon l'une des revendications 1 à 7, caractérisé en ce que le logement articulé (3, 3') de l'élément de blocage (5) est disposé dans la zone de son centre de gravité.

**Claims**

1. A height adjusting arrangement for a guide fitment which is preferably provided on the door post of a motor vehicle for safety belts, comprising a stationary guide rail (1) of double C-shaped profile, a slider (2) which is displaceable along the guide rail and on which the guide fitment can be mounted, and a blocking element (5) which latches the slider (2) to the guide rail (1) and which extends through an opening (11) in the slider (2) and which is generally of a greater longitudinal extent than the transverse extent, wherein provided on the web portion (20) which connects the C-shaped profiles of the guide rail (1), in the longitudinal direction thereof, is a row of detent locations at which one end (21) of the blocking element (5) which is disposed substantially within the guide rail (1) can engage, characterised in that a row of arresting teeth (9, 9') is provided as the row of detent locations, that the blocking element (5) is of such a configuration and mounting that the blocking forces are guided approximately in its longitudinal direction, that the blocking element (5) can be brought into engagement at the other end (22) with a lock button (8) and that the slider (2) is of U-shaped cross-section, with the free limbs of the U-shape being guided in the respective C-shaped profile of the guide rail (1).

2. An arrangement according to claim 1 characterised in that the blocking element (5) has two substantially straight end limbs (21, 22), is of a flat and Z-shaped cross-sectional configuration, and is mounted pivotably in the region (11) in which it passes through the slider (2).

3. An arrangement according to claim 1 or claim 2 characterised in that the blocking element (5) has a companion mounting portion (6') through which is passed a pivot spindle (3') which is supported in a further companion mounting portion of the guide housing (7) on the slider (2).

4. An arrangement according to claim 1 or claim 2 characterised in that the first radius (14) of the blocking element (5), which is towards the guide rail (1), is at its underside a half-shell means for a mounting shell (3) which is inserted into a slot (11) in the slider (2), and that the end limb (22) of the blocking element (5), which is remote from the guide rail (1), carries a support means (6) of plastics material.

5. An arrangement according to one of claims 1 to 4 characterised in that mounted on the end (25) of the slider (2) which is disposed in opposite relationship to the slot (11) is an auxiliary tooth (13) which stands out towards the guide rail (1) and which comes to lie between two arresting teeth (9).

6. An arrangement according to one of claims 1 to 5 characterised by a spring (4) disposed between the slider (2) and the blocking element (5) for biasing the blocking element (5) into the engaged position.

7. An arrangement according to one of claims 1 to 6 characterised in that a guide housing (7) of plastics material is arranged around the slider (2) and has a holding means for receiving the movable lock button (8) with actuating projections (8a, 8b) which can be brought into engagement with the blocking element (5).

8. An arrangement according to one of claims 1 to 7 characterised in that the pivotal mounting (3; 3') of the blocking element (5) is arranged in the region of its centre of gravity.

# Fig.1

Fig. 2

EP 0 186 830 B1

Fig. 3

Fig.4

Fig.5a

13

23

24

24

2

10

Fig.5c

13

Fig.5b

13

2

10

23

11

# Fig.6

Fig.7

EP 0 186 830 B1

Fig.8